# EUROPEAN PATENT SPECIFICATION

(11) **EP 3 794 232 B1**
(45) Date of publication and mention of the grant of the patent: **18.10.2023**
(21) Application number: 19746042.1
(22) Date of filing: 18.07.2019
(51) Int. Cl.: F03D 7/04, F03D 80/50

(54) **SYSTEM AND METHOD FOR MANAGING A PLURALITY OF WIND POWER PLANTS**
SYSTEM UND VERFAHREN ZUM VERWALTEN EINER VIELZAHL VON WINDKRAFTANLAGEN
SYSTÈME ET PROCÉDÉ DE GESTION D'UNE PLURALITÉ DE CENTRALES ÉOLIENNES

(30) Priority: 20.07.2018 EP 18184691
(43) Date of publication of application: 24.03.2021
(73) Proprietor: Siemens Gamesa Renewable Energy A/S, 7330 Brande (DK)
(72) Inventor: KV, Lal, Bangalore 560100 (IN); WAHLBERG, Henrik, 7400 Herning (DK)
(74) Representative: SGRE-Association
(86) International application number: PCT/EP2019/069430
(87) International publication number: WO 2020/016380

(56) References cited:
- EP-A1- 3 382 982
- EP-A2- 3 252 556
- US-A1- 2012 065 901

## Description

The present invention relates generally to accessing and managing wind power plants and more particularly to a method, system and apparatus for accessing and managing a plurality of wind power plants via an external network.

With the increase in cyber threats, cyber security regulations may restrict direct communication with Wind Power Plant (WPP) from outside WPP network. Such regulations may make servicing and maintenance activities more cumbersome as such activities are managed remotely.

To address the cyber security regulations, an intermediate device for each WPP may be used. The usage of such an intermediate device may limit the service activities to wind turbines associated only to a particular WPP. This may be disadvantageous as Service Technicians prefer to manage multiple WPPs in parallel.

According to EP 3 252 556 A2 a wind farm supervision monitoring system can be used to collect data about a status monitoring of each wind turbine, to detect an abnormality status of each wind turbine, to issue an alarm, and to establish an operation and maintenance plan for the detected abnormality status of the wind turbine.

Accordingly, the object of the present invention is to seam-lessly and effectively manage a plurality of WPPs. This object is achieved by generating a SOR message from a SOR preset .

An aspect of the present invention includes a method of managing one or more WPP based on seamless generation of the SOR message from the SOR preset. The method includes identifying maintenance activity/activities to be performed based on event information associated with wind turbines. In an embodiment, the wind turbines belong to a single Wind Power Plant (WPP). In another embodiment, the wind turbines belong to a plurality of WPPs.

As used herein, "event information" refers to an event that occurs in relation to the maintenance and operation of a wind turbine or a wind farm. The event includes upgrading a software or change in operation parameters such as change in wind speed. The event information can also be derived from the operational data of the wind turbine. For example, outliers in the operational data of the wind turbine can generate the event. The event information may be an alarm that is generated during the operation of the wind turbines. The alarm may be generated for hardware, firmware or software related faults/inconsistency in the wind turbines.

The term "maintenance activity" relates to an activity to be performed on the wind turbine based on the event information. For example, change in shut down time of the wind turbine due to the change in wind speed. The maintenance activity is dependent on the alarm generated, such as type of the alarm and level of expertise required to address the alarm.

The SOR preset is selected based on the maintenance activity. The SOR preset includes SOR parameters, such as maintenance parameters associated with the maintenance activity. To select the SOR preset, the SOR preset must be generated.

Preferably such SOR parameters may define at least a data structure of the SOR preset but preferably also define a preset value for each of the SOR parameters.

Such SOR preset can be considered to be a template or a macro for which at least one of the SOR parameters have predefined, preconfigured or preset values. Such preset values may also be collected from previously performed maintenance activity.

According to an embodiment of the present invention, the SOR preset is generated without an existing SOR message by creating preferences for the maintenance activity manually.

According to another embodiment of the present invention, an existing SOR message as source is selected as source for the SOR preset. The selection of the existing SOR message is performed manually or automatically. To automatically select the existing SOR message, the method includes parsing through a database of existing SORs and selecting the existing SOR as source when parameters of the maintenance activity match.

After the existing SOR message is selected, existing target data identified in the existing SOR message. The existing target data comprises data associated with existing wind turbine including associated operational parameters, existing wind park data, existing Internet Protocol (IP) address and existing access timeslot. Generally, the existing target data may not relevant to the maintenance activity to be performed on the wind turbines. Therefore, the existing SOR message replicated without the identified existing target data.

According to an embodiment of the present invention, the existing target data in the existing SOR message is compared with user target data. The user target data refers to the wind turbines for which the maintenance activity is to be performed. If user wind turbine in the user target data is same as the existing wind turbine only data to be changed is the existing access request time-slot.

Notwithstanding the manner of creation of the SOR preset, each SOR preset is digitally signed. Therefore, the method includes digitally signing the SOR preset based on permissions associated with the maintenance activity. This ensures that SOR messages generated from the SOR preset includes the permissions that are pre-requisite to the performance of the maintenance activity.

The method includes SOR message is generated from the SOR preset. The SOR message is generated when user target data comprising user wind turbine and a user access timeslot is received. The user target data may be automatically received based on the event information and availability of service personnel. As used herein, the "user target data" refers to the wind turbines on which the maintenance activity is to be performed.

After the user target data is received, the SOR preset is updated with the user target data and the SOR message for the wind turbines is generated.

According to an embodiment of the present invention, the SOR preset includes initiator field with initiating user data. The initiator field is used to track user who initiated the SOR message creation from the SOR preset for the maintenance activity. This enables tracking of how the SOR message was generated for further analytics and trouble-shooting.

The wind turbines are accessed in upon the approval of the SOR message. Details of the SOR message are inspected and either an approval message or a rejection message is received based on the inspection. The approval of the SOR message is provided by a third party authentication unit. Therefore, security of the WPP is maintained.

The wind turbines are managed by performing managing steps defined in the SOR message and thereby performing the maintenance activity for the accessed wind turbines. In an embodiment, where the wind turbines belong to differing WPPs, the method includes managing the plurality of WPPs. The term "managing steps", which refers to actions or steps that is performed on the wind turbine based on the maintenance activity. For example, the managing steps include determining new shut down time of the wind turbine and modifying the shut down time with the new shut down time.

The method is advantageous because it ensures that the SOR message is initiated the SOR preset with valid or track-able preferences. The SOR preset and the SOR message include unique references that make it possible to track the SOR messages originated from the SOR preset. This is capable of providing an overview and status of all SORs initiated for a specific purpose. The SOR presets are re-usable by design and hence it is not required to save the preferences outside in an external device. Such streamlined creation of the SOR messages improves the pattern of Service Operations.

Further, through this method it is possible to revoke and update the SOR messages initiated from the SOR preset. For example, if the SOR preset is revoked, initiated service operations based on that specific preset can be tracked and kept on hold.

Furthermore, the method ensures compatibility assurance, consistent behavior of Service operations as the compatibility with different wind turbines and versions are controlled at the step of generating the SOR preset. Accordingly, the SOR presets define and track progress of the SOR messages centrally. Therefore, the method enables efficient utilization of Service personnel and eliminate the need for repetitive involvement of an expert service personnel in each and every service operation.

According to another aspect of the present invention a system for managing a plurality of WPPs is provided. Each WPP has a plurality of wind turbines, respectively. Each wind turbine includes a processor, a sensor unit and a communication unit. The sensing unit includes one or more sensors to collect operation data of the wind turbine.

The system includes a central server, WPP servers and an authentication unit. The WPP servers are servers that are configured on demilitarized zone (DMZ) perimeter of the WPPs. The WPP servers include processors, communication units and memory. Further, each WPP server is associated with corresponding WPPs. Furthermore, each WPP server is in communication with the wind turbines through private networks.

The central server is in communication with the authentication unit through an external network. In an embodiment, wherein the authentication unit is a module in the one or more WPP servers, the central server communicates with the WPP servers via the external network. The central server comprises a processor, a communication unit and a memory. The memory is configured to store computer program instructions defined by modules. The processing unit is configured to execute the defined computer program instructions in the modules. The modules include SOR preset module and SOR message module. The SOR preset module includes instructions regarding generation of SOR preset. The SOR message generated from SOR preset through the execution of SOR message module. The SOR messages are generated to include a header, action field, event field etc.

During execution of the SOR message module, the central server is configured to identify maintenance activity to be performed based on event information associated with the wind turbines. The central server is configured to generate the SOR message comprising an access request to the wind turbine based on the identified maintenance activity. As used herein "access request" relates to a command for controlling the wind turbine identified by a wind turbine identifier in the SOR message.

The SOR message is sent by central server to the authentication unit over the external network. The SOR message is transmitted for approval, to access the wind turbine and to perform managing steps on the wind turbine. The authentication unit is in communication with the WPP server and determines whether the SOR message must be approved. Accordingly, the SOR message is reviewed and upon approval the central server accesses the wind turbine.

According to an embodiment of the present invention, the authentication unit of the system is also referred to as an SOR Administrator or a Site Administrator, responsible for the operation of the WPPs. In an embodiment, the authentication unit may include a separate server that interacts with the WPP servers. In another embodiment, the authentication unit can be a module residing in the WPP server. The authentication unit includes a processor, a communication unit, a graphical under interface and memory. The memory includes computer readable instructions defined as modules, such as a SOR approval module. The authentication unit communicates with the WPP servers directly. In an embodiment, the authentication unit can also communicate to the WPP servers through the external network.

During operation of the system, the central server transmits the SOR message to the authentication unit. In an embodiment, where the authentication unit is a module in the WPP server the SOR message is transmitted to the WPP server. In another embodiment, the authentication unit is configured to view the SOR message on an application accessible to the WPP server and the authentication unit. For example, the authentication unit may get a notification as an alert in a User Interface Dashboard.

Upon receipt of the SOR message, the SOR approval module is executed by the processor to verify the received SOR message. Based on the verification of the SOR message, the communication unit transmits either an approval message or a rejection message in relation to the access request in the SOR message. If the approval message is transmitted to the central server, the SOR message will be executed as per a pre-defined strategy, such as immediate autonomous execution, timed/delayed execution or only when triggered explicitly.

According to an embodiment of the present invention, the SOR preset includes three major sections a header, an operation field and a preset user field. The SOR preset can include other sections such as sub-segment dependency field and payload.

According to another embodiment of the present invention, the preset header contains a preset identifier to identify the SOR preset in the SOR messages created from the SOR preset. The preset header also includes the preset version to indicate the version of the SOR preset. In an embodiment, the preset version reflects version of an existing SOR message that was used to generate the SOR preset. The SOR preset also includes a preset timestamp that is assigned at the time of creation of the SOR preset.

The SOR preset includes a source identifier indicating a unique reference of the existing SOR message. This is advantageous to track how the SOR preset was generated. Further, the SOR preset also includes a compatibility field indicating wind turbines and wind parks that are compatible with the SOR preset.

According to yet another embodiment of the present invention, the operation field includes the following fields:
i. Service Operation Type (SOT): the SOT includes component updates such as remote firmware update, parameter update, etc.
ii. Input field: the input field includes input parameter values are whose values are updated based on a user target data. The input parameter values are required to perform the actual Service Operation
iii. Pre-condition field: the pre-condition field includes pre-conditions expected by the existing SOR message. For example, the pre-condition field includes compatibility between existing wind turbine in the existing SOR message and the target wind turbine. This field ensures that misuse of the SOR preset is prevented against in-compatible target wind turbine or inconsistent Service Operations.
iv. Reference field: the reference field holds reference to external files associated with the Service Operation. For example, in case of firmware updates, the reference field is used to ensure the same firmware version is applied on all Wind Power Plants targeted by the SOR messages generated from the SOR preset.
v. Post-condition field: the post-condition field comprises post-conditions to verify success of performance of the maintenance activity.

According to an embodiment of the present invention, the SOR preset also includes the preset user field indicating users authorized to generation of the SOR preset, usage of the SOR preset or review of the SOR preset. Further, the preset user field includes an originator field to indicate the user who initiated the SOR preset either by replicating the existing SOR message or by manually generating the SOR preset.

According to another embodiment of the present invention, the SOR preset includes a validity field. The validity field indicates expiry timestamp of the SOR preset. Therefore, the validity field enables marking of all SOR messages as Invalid after expiry of the SOR preset timestamp. The validity field can also be provided as part of the operation field

According to an embodiment of the present invention, the SOR message is generated when the SOR preset is updated with user target data. The user target data includes SOR time data. The SOR time data includes SOR timestamp i.e. timestamp when the user target data is input such that the SOR message is generated. Further, the SOR time data includes details of preferred start time and end time for the validity of the SOR message.

As used herein, the user target data also includes target details. The target field includes park field and unit field. The park field includes unique identifier for the target WPP. The unit field includes unique identifiers for the target wind turbines in the target WPP and IP address for the target wind turbines.

In addition to the target details, the user target data also includes signature of initiator of the SOR message and access timeslot for access of the target wind turbines. In an embodiment, the user providing user target data is the initiator of the SOR message.

Accordingly, the SOR message is a combination of the SOR preset and the user target data. The structure of the SOR message can be divided into three major sections a SOR header, a SOR operation field and a SOR signature field. The SOR message can include other sections such as a SOR action field and a SOR event field.

The present invention is further described hereinafter with reference to illustrated embodiments shown in the accompanying drawings, in which:
- FIG 1: is a block diagram illustrating a system for managing a plurality of wind power plants (WPPs) according to the present invention;
- FIG 2: is a schematic representation of a Service Opera-tion Request (SOR) preset, according to the present invention;
- FIG 3: is a schematic representation of generation of a SOR message from the SOR preset in FIG 2;
- FIG 4: is a process flowchart illustrating a method for managing the plurality of wind turbines according to the present invention.

The foregoing summary, as well as the following detailed description of the invention, is better understood when read in conjunction with the appended drawings. For the purpose of illustrating the invention, exemplary constructions of the invention are shown in the drawings. However, the invention is not limited to the specific methods and structures disclosed herein. The description of a method step or a structure referenced by a numeral in a drawing is applicable to the description of that method step or structure shown by that same numeral in any subsequent drawing herein.

For the purpose of the description the term "private network" refers to a network that belong to a third party responsible for the operation of the wind power plants (WPPs). For example, the private network is the network within the demilitarized zone (DMZ) perimeter of the WPPs and is not directly accessible from outside the DMZ perimeter. The term to "external network" that is external to the private network and the DMZ perimeter. The external network includes Internet and Virtual Private Networks (VPNs).

Further, for clarity, the term "event information" refers to an event that occurs in relation to the maintenance and operation of a wind turbine or a wind farm. The event includes upgradation of a software or change in operation parameters such as change in wind speed. The event information can also be derived from the operational data of the wind turbine. For example, outliers in the operational data of the wind turbine can generate the event. The term "maintenance activity" relates to an activity to be performed on the wind turbine based on the event information. For example, change in shut down time of the wind turbine due to the change in wind speed. The term "managing steps" refers to steps or actions that is performed on the wind turbine based on the maintenance activity. Considering the previous example, the managing steps modifying the shut down time with the new shut down time.

The short form "SOR" refers to Service Operation Request. The Service operation request is generated by service personnel or users of a WPP or wind turbine. The SOR is sent to the server via a message and it is referred to as "SOR message". A SOR message can be generated in bulk using preset preferences. The preset preferences are referred to as "SOR preset". The term "field" in relation to structure of a SOR preset is computer instruction that has a purpose and usually a fixed size in the SOR preset. The purpose of each field in the SOR preset is defined in the below description. The SOR preset is updated with "target field" or "target data" or "user target data" or "user target wind turbine". As used herein, the term "target" refers to the WPP or Wind turbine on which the maintenance activity has to be performed. The "target WPP" or the "target wind turbine" can be automatically determined from the event information or is manually input by a service personnel/user.

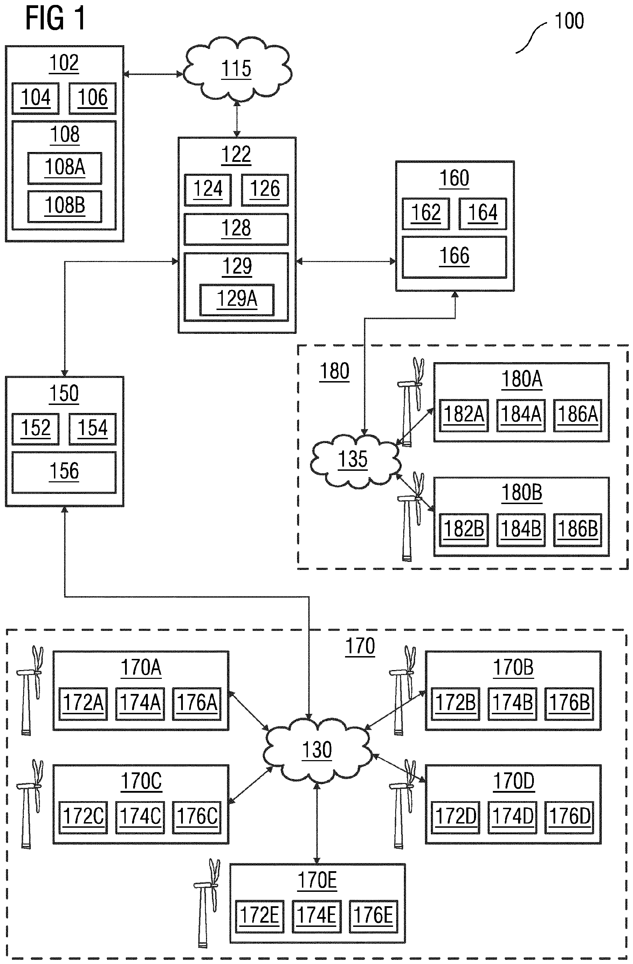

FIG 1 is a block diagram illustrating a system 100 for managing a plurality of wind power plants (WPPs) 170 and 180. Each WPP 170 and 180 has a plurality of wind turbines 170A-E and 180A-B, respectively. Each wind turbine 170A-E and 180A-B includes a processor 172A-E and 182A-B, a sensor unit 174A-E and 184A-B and a communication unit 176A-E and 186A-B.

The system 100 also includes a central server 102, WPP servers 150, 160 and an authentication unit 122. The WPP servers 150 and 160 are servers that are configured on demilitarized zone (DMZ) perimeter of the WPPs 170 and 180, respectively. The WPP servers 150 and 160 include processors 152 and 162, communication units 154 and 164 and memory 156 and 166. Further, each WPP server 150 and 160 is associated with corresponding WPPs 170 and 180, respectively. Furthermore, each WPP server 150 and 160 is in communication with the wind turbines 170A-E and 180A-B through private networks 130 and 135, respectively.

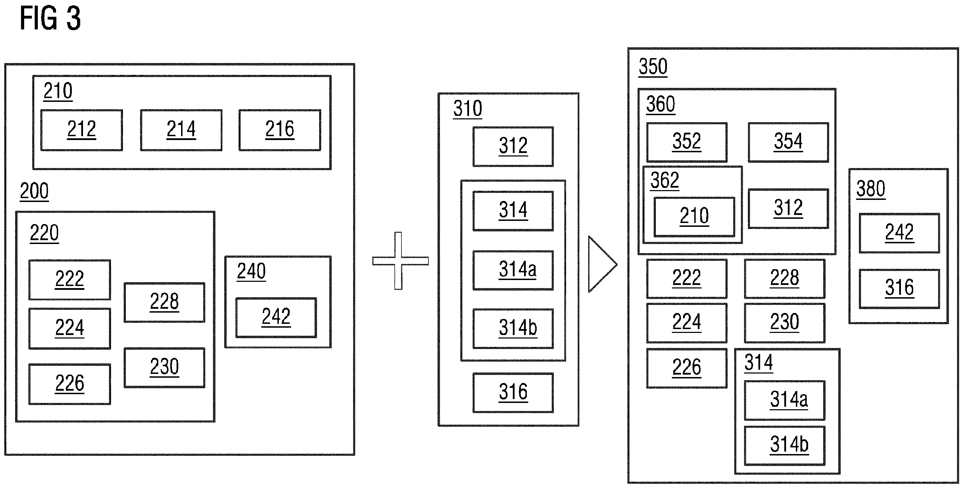

As shown in FIG 1, the central server 102 is in communication with the authentication unit 122 through an external network 115. In an embodiment, wherein the authentication unit is a module in the one or more WPP servers, the central server communicates with the WPP servers via the external network. The central server 102 comprises a processor 104, a communication unit 106 and a memory 108. As used herein, "memory" refers to all computer readable media, for example, nonvolatile media, volatile media, and transmission media except for a transitory, propagating signal. The memory 108 is configured to store computer program instructions defined by modules, for example 108A and 108B. The processing unit 104 is configured to execute the defined computer program instructions in the modules 108A and 108B. The module 108A is a Service Operation Request (SOR) preset module 108A that includes instructions regarding generation of SOR preset. The SOR message generated from a SOR preset through the execution of SOR message module 108B. The generation of the SOR message from the SOR preset is further elaborated in FIG 3. The SOR messages are generated to include a header, action field, event field etc.

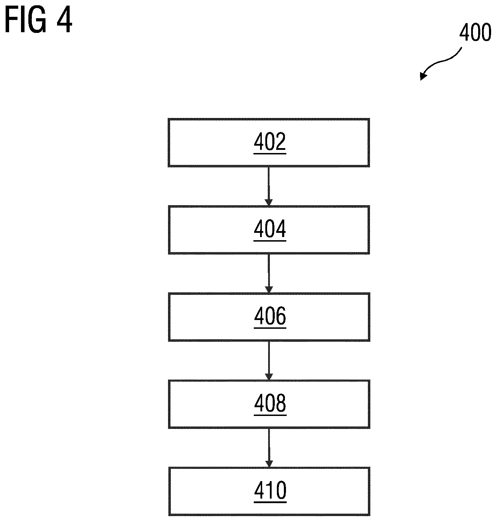

The SOR preset module 108A is executed in accordance with the steps disclosed in FIG 4. For the purpose of explanation, the wind turbine 170A in WPP 170 is considered. During execution of the SOR message module 108B, the central server 102 is configured to identify maintenance activity to be performed based on event information associated with the wind turbines 170A. The central server 102 is configured to generate the SOR message comprising an access request to the wind turbine 170A based on the identified maintenance activity. As used herein "access request" relates to a command for controlling the wind turbine 170A identified by a wind turbine identifier in the SOR message. The SOR message is sent by central server 102 to the authentication unit 122 over the external network 115. The SOR message is transmitted for approval, to access the wind turbine 170A and to perform managing steps on the wind turbine 170A. The authentication unit 122 is in communication with the WPP server 150 and determines whether the SOR message must be approved. Accordingly, the SOR message is reviewed and upon approval the central server 102 accesses the wind turbine 170A.

As shown in FIG 1, the system 100 also includes the authentication unit 122. The authentication unit 122 of the system 100 is also referred to as an SOR Administrator or a Site Administrator, responsible for the operation of the WPPs 170 and 180. The authentication unit 122 in FIG 1 is a separate server that interacts with the WPP servers 150 and 160. In an embodiment, the authentication unit 122 can be a module residing in the WPP server 150 and 160. The authentication unit 122 includes a processor 124, a communication unit 126, a graphical under interface 128 and memory 129. The memory 129 includes computer readable instructions defined as modules, such as a SOR approval module 129A. The authentication unit 122 communicates with the WPP servers 150 and 160 directly. In an embodiment, the authentication unit can also communicate to the WPP servers 150 and 160 through the external network 115.

During operation of the system 100, the central server 102 transmits the SOR message to the authentication unit 122. In an embodiment, where the authentication unit is a module in the WPP server the SOR message is transmitted to the WPP server 150. In another embodiment, the authentication unit 122 is configured to view the SOR message on an application accessible to the WPP server 150 and the authentication unit 122. For example, the authentication unit 122 may get a notification as an alert in a User Interface Dashboard.

Upon receipt of the SOR message, the SOR approval module 129A is executed by the processor 124 to verify the received SOR message. Based on the verification of the SOR message, the communication unit 126 transmits either an approval message or a rejection message in relation to the access request in the SOR message. If the approval message is transmitted to the central server 102, the SOR message will be executed as per a pre-defined strategy, such as immediate autonomous execution, timed/delayed execution or only when triggered explicitly. The method of managing the WPPs 150 and 160 is further explained in FIG 4.

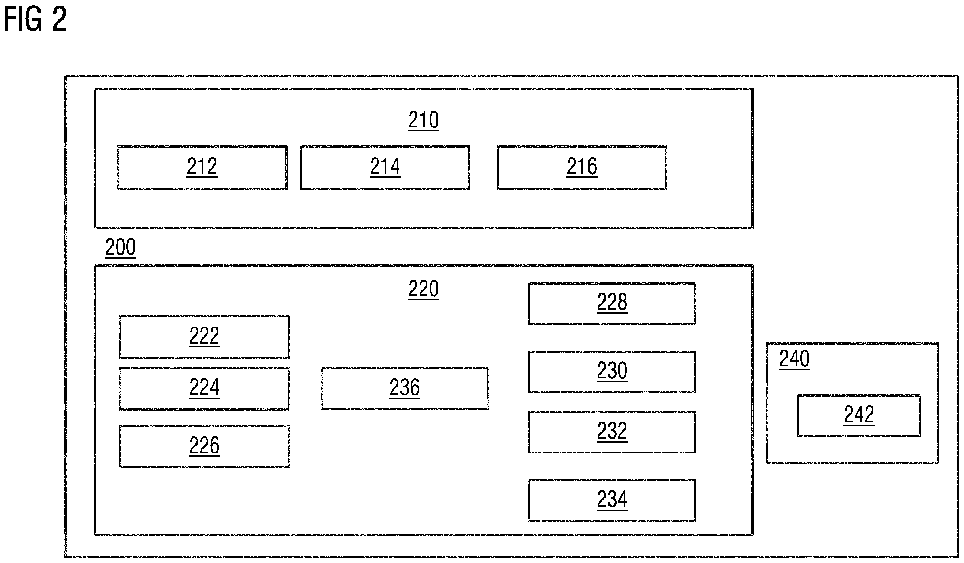

FIG 2 is a schematic representation of a Service Operation Request (SOR) preset 200, according to the present invention. The structure of the SOR preset can be divided into three major sections a header 210, an operation field 220 and a preset user field 240. The SOR preset 200 can include other sections such as sub-segment dependency field and payload.

As shown in FIG 2, the preset header 210 contains a preset identifier 212 to identify the SOR preset 200 in the SOR messages created from the SOR preset 200. The preset header 210 also includes the preset version 214 to indicate the version of the SOR preset. In an embodiment, the preset version 214 reflects version of an existing SOR message that was used to generate the SOR preset. The SOR preset 200 also includes a preset timestamp 216 that is assigned at the time of creation of the SOR preset 200.

The operation field 220 includes the following fields:
i. Service Operation Type (SOT) 222: The SOT is generated from the maintenance activity that is to be performed on a wind turbine, also referred to as target wind turbine or user wind turbine. For example, the SOT 222 includes component updates such as remote firmware update, parameter update, etc.
ii. Input field 224: the input field 224 includes input parameter values are whose values are updated based on a user target data. The input parameter values are required to perform the actual Service Operation
iii. Pre-condition field 226: the pre-condition field 226 includes pre-conditions expected by the existing SOR message. For example, the pre-condition field 226 includes compatibility between existing wind turbine in the existing SOR message and the target wind turbine. If the compatibility pre-condition is not met, the SOR message cannot be generated for the target wind turbine. Accordingly, the pre-condition field 226 ensures that the existing SOR message associated with a first service operation cannot be modified to generate another type of SOR message for a second service operation. Therefore, misuse of the SOR preset 200 is prevented against in-compatible target wind turbine or inconsistent Service Operations.
iv. Reference field 228: the reference field 228 holds reference to external files associated with the Service Operation. For example, in case of firmware updates, t eh reference field is used to ensure the same firmware version is applied on all Wind Power Plants targeted by the SOR messages generated from the SOR preset 200.
v. Validity field 230: the validity field 230 indicates expiry timestamp of the SOR preset. The validity field 230 limits the usage of the SOR preset 200 beyond the planned expiry timestamp. Therefore, the validity field 230 enables marking of all SOR messages as Invalid after expiry timestamp.
vi. Execution field 232: the execution field 232 comprises directions and preferences to execute the Service Operation and thereby performing the maintenance activity associated with the target wind turbine. For example, the execution field 232 includes parameter values indicating the directions to execute the SOR message such as automatic execution or manually triggered execution etc. The execution field 232 also includes time slot preference indicating preferred start time and end time for performing the managing steps.
vii. Impact field 234: the impact field 234 comprises expected impact on the target wind turbine or target wind park due to performance of the maintenance activity.
viii. Post-condition field 236: the post-condition field 236 comprises post-conditions to verify success of performance of the maintenance activity.

The SOR preset 200 also includes the preset user field 240 indicating users authorized to generation of the SOR preset 200, usage of the SOR preset 200 or review of the SOR preset 200. Further, the preset user field 240 includes an originator field 242 to indicate the user who initiated the SOR preset 200 either by replicating the existing SOR message or by manually generating the SOR preset 200.

FIG 3 is a schematic representation of generation of a SOR message 350 from the SOR preset 200. The SOR message 350 is generated when the SOR preset 200 is updated with user target data 310. The user target data 310 includes SOR time data 312. The SOR time data 312 includes data associated with SOR timestamp i.e. timestamp when the user target data 310 is input such the SOR message 350 is generated. Further, the SOR time data 312 includes time slot details of preferred start time and end time for the validity of the SOR message 350.

The user target data 310 also includes target details 314. The target field 314 includes park field 314a and unit field 314b. The park field 314a includes unique identifier for the target WPP. The unit field 314b includes unique identifiers for the target wind turbines in the target WPP and IP address for the target wind turbines.

In addition to the target details 314, the user target data 310 also includes signature 316 of initiator of the SOR message 350. In an embodiment, the user providing user target data 310 is the initiator of the SOR message 350.

As shown in FIG 3, the SOR message 350 is a combination of the SOR preset 200 and the user target data 310. The structure of the SOR message 350 can be divided into three major sections a SOR header 360, a SOR operation field 370 and a SOR signature field 380. The SOR message 350 can include other sections such as a SOR action field and a SOR event field (not shown in FIG 3).

As shown in FIG 3, the SOR header 360 contains a unique identifier 352 to identify the SOR message and to avoid replay attacks, a SOR version 354 to indicate the version of the SOR message and a SOR timestamp 312 that is assigned at the time of creation of the SOR message 350. In addition, the SOR header 360 also includes source field 362, which includes the preset header 210. Accordingly, the source field 362 includes historical details of the SOR preset 200 and the existing SOR message. This is advantageous as details of the SOR message 350 can be referenced with the existing SOR message effectively in the event of troubleshooting.

The SOR message 350 includes the operation field 370 that contains various parameters related to at least one managing step to be performed on a wind turbine (for example wind turbine 170A). The operation field 370 includes the fields in the preset operation field 220 and the target details 314. Accordingly, the operation field 370 includes Service Operation Type (SOT) 222, Input field 224, Pre-condition field 226, Reference field 228, Validity field 230, park field 314a and unit field 314b.

The SOR signature field 380 includes the originator field 242 indicate to the user who initiated the SOR preset 200 and the signature 316 of initiator of the SOR message 350. The SOR signature field 380 is advantageous to the users of the SOR preset 200 and the SOR message 350 to ensure authentication.

FIG 4 is a process flowchart illustrating a method 400 for managing the plurality of wind turbines according to the present invention. The process begins with step 402 by identifying maintenance activity/activities to be performed based on event information associated with wind turbines. In an embodiment, the wind turbines belong to a single Wind Power Plant (WPP). In another embodiment, the wind turbines belong to a plurality of WPPs.

For example, the event information may be an alarm that is generated during the operation of the wind turbines. The alarm may be generated for hardware, firmware or software related faults/inconsistency in the wind turbines. The maintenance activity is dependent on the alarm generated, such as type of the alarm and level of expertise required to address the alarm.

At step 404, a service operation request (SOR) preset is selected. The SOR preset includes SOR parameters, such as maintenance parameters associated with the maintenance activity. To perform step 404, an existing SOR message as source is selected as source for the SOR preset. The selection of the existing SOR message is performed manually or automatically. To automatically select the existing SOR message, the method includes parsing through a database of existing SORs or SOR presets and selecting the existing SOR or SOR preset as source when parameters of the maintenance activity match.

Existing SOR presets may have been created and stored prior to the just discussed method, for example by storing parts of a previously successfully executed SOR message.

After the existing SOR message is selected, existing target data may be identified in the existing SOR message. The existing target data comprises data associated with existing wind turbine including associated operational parameters, existing wind park data, existing Internet Protocol (IP) address and existing access timeslot. The existing target data is not relevant to the maintenance activity to be performed on the wind turbines. Therefore, the existing SOR message may be replicated without the identified existing target data.

In an embodiment, the existing target data in the existing SOR message is compared with user target data. The user target data refers to the wind turbines for which the maintenance activity is to be performed. If user wind turbine in the user target data is same as the existing wind turbine only data to be changed is the existing access request timeslot.

In another embodiment, the SOR preset is generated without the existing SOR message by creating general preferences for the maintenance activity.

Notwithstanding the manner of creation of the SOR preset, each SOR preset is digitally signed. Therefore, step 404 includes digitally signing the SOR preset based on permissions associated with the maintenance activity. This ensures that SOR messages generated from the SOR preset includes the permissions that are pre-requisite to the performance of the maintenance activity.

At step 406, SOR message is generated from the SOR preset. The SOR message is generated when user target data comprising user wind turbine, a user access request is received. The user target data may be automatically received based on the event information and availability of service personnel. In the present method, the user target data refers to the wind turbines on which the maintenance activity is to be performed.

After the user target data is received, the SOR preset is updated with the user target data and the SOR message for the wind turbines is generated. In an embodiment, the SOR preset with initiator field with initiating user data for the maintenance activity. This enables tracking of how the SOR message was generated for further analytics and trouble-shooting.

At step 408, the wind turbines are accessed in upon the approval of the SOR message. Details of the SOR message are inspected and either an approval message or a rejection message is received based on the inspection.

At step 410, the wind turbines are managed by performing managing steps defined in the SOR message and thereby performing the maintenance activity for the accessed wind turbines. In an embodiment, where the wind turbines belong to differing WPPs, the step 410 includes managing the plurality of WPPs.

The invention enables effective generation of the SOR messages for wind turbines across multiple WPPs, i.e. multiple wind parks. The SOR message eliminates the need for a direct remote interactive connection to the WPP and the wind turbines. Instead, the SOR message created at the central server can be transmitted to the WPP server, which is capable of interpreting and processing the commands/instructions/parameter values provided within the SOR message. In addition, it provides the flexibility to the customer representative i.e. site administrator to approve/reject the submitted SOR messages through the authentication unit. The site administrator is able view details such as criticality of executing the SOR message, motivation behind the SOR message, down-time of the wind power plant or the wind turbine required for the SOR activity. Based on the criticality provided in the SOR message, the customer representative may also visit the WPP during the execution needed for the suggested timeslot.

Apart from the above advantages, the present invention also supports protocol conversion. The SOR message can be configured to adopt a generic protocol whereas the WPP server that processes the SOR message can continue using a legacy protocol, which can contain known vulnerabilities. Through the above mentioned system and method, the SOR messages will limit the usage of legacy protocols within the WPP boundaries. Further, the SOR messages are auditable compliance towards security standards. The SOR messages support offline transmission methods so that the WPP server can lock down all remote interactive communication. This in turn ensures usage industry standard of read only channels for transferring the execution feedbacks back to central server.

## Claims

1. A method for managing one or more wind power plants (WPPs) (170, 180) each comprising a plurality of wind turbines (170A-E, 180A-B), the method comprising:
identifying at least one maintenance activity to be performed based on event information associated with at least one wind turbine in a first wind power plant (180) of the plurality of wind power plants (170, 180); the method **characterized by**:
selecting a service operation request (SOR) preset (200) comprising SOR parameters, wherein the SOR parameters includes maintenance parameters associated with the at least one maintenance activity;
generating a SOR message from the SOR preset (200);
accessing the at least one wind turbine (180A) in the first wind power plant (180) upon the approval of the SOR message; and
managing the first wind power plant (180) by performing managing steps defined in the SOR message and thereby performing the at least one maintenance activity for the accessed at least one wind turbine.

2. The method as claimed in claim 1, wherein selecting a SOR preset (200) comprises:
selecting an existing SOR message as source for the SOR preset (200);
identifying existing target data from the existing SOR message, wherein existing target data comprises data associated with existing wind turbine including associated operational parameters, existing wind park data, existing Internet Protocol (IP) address and existing access timeslot; and
replicating the existing SOR message without the identified existing target data.

3. The method as claimed in claim 2, further comprising:
comparing the existing target data in the existing SOR message with user target data (310), wherein when user wind turbine in the user target data is same as the existing wind turbine the existing target data comprises the existing access request time-slot.

4. The method as claimed in claim 2, wherein replicating the existing SOR message without the existing target data comprises:
ensuring fidelity between the existing SOR message and the SOR preset (200).

5. The method as claimed in claim 4, further comprising:
digitally signing the SOR preset (200) based on permissions associated with the at least one maintenance activity.

6. The method as claimed in one of the claims 1 or 2, further comprising:
generating the SOR preset (200) from the existing SOR message, wherein the SOR preset (200) comprises:
a preset identifier (212) as a unique reference of the SOR preset (200);
a source identifier indicating a unique reference of the existing SOR message;
a compatibility field indicating wind turbines and wind parks that are compatible with the SOR preset (200);
an operation field (220) comprising type of operation and at least one managing step to be performed on the at least one wind turbine;
a validity field (230) indicating expiry timestamp of the SOR preset (200); and
a preset user field (240) indicating users authorized to perform at least one of generation of the SOR preset (200), usage of the SOR preset (200) and review of the SOR preset (200).

7. The method as claimed in any one of the preceding claims, wherein generating a SOR message from the SOR preset (200) comprises:
receiving user target data (310) comprising user wind turbine, a user access request, wherein the user wind turbine and the user access request are associated with the at least one wind turbine;
updating the SOR preset (200) with the user target data; and
generating the SOR message (350) for the user wind turbine from the SOR preset (200) with initiator field with initiating user data for the identified maintenance activity.

8. A system (100) for managing a plurality of wind power plants (WPPs) (170, 180) each comprising a plurality of wind turbines (170A-E, 180A-B), the system comprising:
a central server (102) in communication with one or more WPP servers (150, 160) through an external network (115), wherein each WPP server (150, 160) is associated with a corresponding wind power plant of the plurality of wind power plants (170, 180) and is in communication with one or more wind turbines in the corresponding wind power plant through a private network (130, 135), wherein the central server configured to:
identify at least one maintenance activity to be performed based on event information associated with at least one wind turbine in a first wind power plant;
select a service operation request (SOR) preset (200) comprising SOR parameters, wherein the SOR parameters includes maintenance parameters associated with the identified maintenance activity;
generate a SOR message (350) from the SOR preset (200);
access the at least one wind turbine in the first wind power plant upon the approval of the SOR message; and
managing the first wind power plant by performing managing steps defined in the SOR message and thereby performing the at least one maintenance activity for the accessed at least one wind turbine,
wherein the system is capable of managing the plurality of wind power plants when the at least one maintenance activity is performed in wind turbines in differing wind power plants of the plurality of wind power plants (170, 180).

9. The system as claimed in claim 8, wherein the at least one wind turbine comprises:
at least one sensor (174A-E, 184A-B) for collecting operational data for the at least one wind turbine; and
a communication unit (176A-E, 186A-B) communicatively coupled to the WPP server through the private network.

10. The system (100) of as claimed in claim 8 or 9, wherein the SOR preset (200) comprises:
a preset header (210) to indicate version of the SOR preset (200);
a compatibility field indicating wind turbines and wind parks that are compatible with the SOR preset (200);
an operation field (220) comprising type of operation and at least one managing step to be performed on the at least one wind turbine;
a validity field (230) indicating expiry timestamp of the SOR preset (200); and
a preset user field (240) indicating users authorized to perform at least one of generation of the SOR preset (200), usage of the SOR preset (200) and review of the SOR preset (200) .

11. The system of as claimed in claim 10, wherein the SOR preset (200) further comprises:
a preset identifier as a unique reference of the SOR preset (200); and
a source identifier indicating a unique reference of the existing SOR message.

12. The system as claimed in claim 10, wherein the operation field comprises:
a pre-condition field (226) comprising pre-conditions to initiate the at least one maintenance activity;
an input field (224) comprising input parameters, wherein the input parameter values are whose values are updated based on a user target data;
an execution field (232) comprising directions and preferences to execute the at least one maintenance activity;
an impact field (234) comprising expected impact on the first WPP due to performance of the at least one maintenance activity; and
a post-condition field (236) comprising post-conditions to verify success of performance of the at least one maintenance activity.

13. The system as claimed in any one of the claims 8, 10 and 11, wherein the SOR message comprises:
a SOR header (360) including the preset identifier, SOR message identifier and a SOR message version;
a SOR operation field (370) comprising the operation field (220) in the SOR preset (200); and
an SOR signature field (380) with initiating user data associated with user generating the SOR message from the SOR preset (200).

## Patentansprüche

1. Verfahren zum Verwalten eines oder mehrerer Windparks (WPPs) (170, 180), die jeweils eine Mehrzahl von Windturbinen (170A-E, 180A-B) umfassen, wobei das Verfahren Folgendes umfasst:
Identifizieren mindestens einer durchzuführenden Wartungsaktivität basierend auf Ereignisinformationen, die mindestens einer Windturbine in einem ersten Windpark (180) der Mehrzahl von Windparks (170, 180) zugeordnet sind, wobei das Verfahren durch Folgendes gekennzeichnet ist:
Auswählen einer Service-Vorgangsanfrage-(SOR-)Voreinstellung (200), die SOR-Parameter umfasst, wobei die SOR-Parameter Wartungsparameter beinhalten, die der mindestens einen Wartungsaktivität zugeordnet sind,
Erzeugen einer SOR-Nachricht aus der SOR-Voreinstellung (200),
Zugreifen auf die mindestens eine Windturbine (180A) in dem ersten Windpark (180) auf die Zustimmung zu der SOR-Nachricht hin und
Verwalten des ersten Windparks (180) durch Durchführen von in der SOR-Nachricht definierten Verwaltungsschritten und dadurch Durchführen der mindestens einen Wartungsaktivität für die mindestens eine Windkraftanlage, auf die zugegriffen wird.

2. Verfahren nach Anspruch 1, wobei das Auswählen einer SOR-Voreinstellung (200) Folgendes umfasst:
Auswählen einer vorhandenen SOR-Nachricht als Quelle für die SOR-Voreinstellung (200),
Identifizieren vorhandener Zieldaten aus der vorhandenen SOR-Nachricht, wobei vorhandene Zieldaten Daten umfassen, die vorhandenen Windturbinen zugeordnet sind, einschließlich zugeordneter Betriebsparameter, vorhandener Windparkdaten, vorhandener Internet-Protocol-(IP-)Adresse und vorhandenem Zugriffszeitfenster, und
Replizieren der vorhandenen SOR-Nachricht ohne die identifizierenden vorhandenen Zieldaten.

3. Verfahren nach Anspruch 2, ferner Folgendes umfassend:
Vergleichen der vorhandenen Zieldaten in der vorhandenen SOR-Nachricht mit Benutzerzieldaten (310), wobei, wenn die Benutzerwindturbine in den Benutzerzieldaten die gleiche ist wie die vorhandene Windturbine, die vorhandenen Zieldaten das vorhandene Zugriffsanfrage-Zeitfenster umfassen.

4. Verfahren nach Anspruch 2, wobei das Replizieren der vorhandenen SOR-Nachricht ohne die vorhandenen Zieldaten Folgendes umfasst:
Gewährleisten der Wiedergabetreue zwischen der vorhandenen SOR-Nachricht und der SOR-Voreinstellung (200).

5. Verfahren nach Anspruch 4, ferner Folgendes umfassend:
digitales Signieren der SOR-Voreinstellung (200) basierend auf Berechtigungen, die der mindestens einen Wartungsaktivität zugeordnet sind.

6. Verfahren nach einem der Ansprüche 1 oder 2, ferner Folgendes umfassend:
Erzeugen der SOR-Voreinstellung (200) aus der vorhandenen SOR-Nachricht, wobei die SOR-Voreinstellung (200) Folgendes umfasst:
eine Voreinstellungskennung (2123) als eindeutige Referenz der SOR-Voreinstellung (200),
eine Quellenkennung, die eine eindeutige Referenz der vorhandenen SOR-Nachricht (200) angibt,
ein Kompatibilitätsfeld, das Windturbinen und Windparks angibt, die mit der SOR-Voreinstellung (200) kompatibel sind,
ein Vorgangsfeld (220), das eine Art des Vorgangs und mindestens einen Verwaltungsschritt umfasst, die an der mindestens einen Windturbine durchzuführen sind,
ein Gültigkeitsfeld (230), das einen Verfallszeitstempel der SOR-Voreinstellung (200) angibt, und
ein Voreinstellungsbenutzerfeld (240), das Benutzer angibt, die autorisiert sind, mindestens eines von Erzeugung der SOR-Voreinstellung (200), Nutzung der SOR-Voreinstellung (200) und Überprüfung der SOR-Voreinstellung (200) durchzuführen.

7. Verfahren nach einem der vorhergehenden Ansprüche, wobei das Erzeugen einer SOR-Nachricht aus der SOR-Voreinstellung (200) Folgendes umfasst:
Empfangen von Benutzerzieldaten (10), die eine Benutzerwindturbine, eine Benutzerzugriffsanfrage umfassen, wobei die Benutzerwindturbine und die Benutzerzugriffsanfrage der mindestens einen Windturbine zugeordnet sind,
Aktualisieren der SOR-Voreinstellung (200) mit den Benutzerzieldaten und
Erzeugen der SOR-Nachricht (350) für die Benutzerwindturbine aus der SOR-Voreinstellung (200) mit einem Initiatorfeld mit Daten des initiierenden Benutzers für die identifizierte Wartungsaktivität.

8. System (100) zum Verwalten einer Mehrzahl von Windparks (WPPs) (170, 180), die jeweils eine Mehrzahl von Windturbinen (170A-E, 180A-B) umfassen, wobei das System Folgendes umfasst:
einen Zentralserver (102) in Kommunikation mit einem oder mehreren WPP-Servern (150, 160) über ein externes Netzwerk (115), wobei jeder WPP-Server (150, 160) einem entsprechenden Windpark der Mehrzahl von Windparks (170, 180) zugeordnet ist und über ein privates Netzwerk (130, 135) in Kommunikation mit einer oder mehreren Windturbinen in dem entsprechenden Windpark steht, wobei der Zentralserver für Folgendes konfiguriert ist:
Identifizieren mindestens einer durchzuführenden Wartungsaktivität basierend auf Ereignisinformationen, die mindestens einer Windturbine in einem ersten Windpark zugeordnet sind,
Auswählen einer Service-Vorgangsanfrage-(SOR-)Voreinstellung (200), die SOR-Parameter umfasst, wobei die SOR-Parameter Wartungsparameter beinhalten, die der mindestens einen Wartungsaktivität zugeordnet sind,
Erzeugen einer SOR-Nachricht (350) aus der SOR-Voreinstellung (200),
Zugreifen auf die mindestens eine Windturbine in dem ersten Windpark auf die Zustimmung zu der SOR-Nachricht hin und
Verwalten des ersten Windparks durch Durchführen von in der SOR-Nachricht definierten Verwaltungsschritten und dadurch Durchführen der mindestens einen Wartungsaktivität für die mindestens eine Windkraftanlage, auf die zugegriffen wird,
wobei das System fähig ist, die Mehrzahl von Windparks zu verwalten, wenn die mindestens eine Wartungsaktivität in Windturbinen in verschiedenen Windparks der Mehrzahl von Windparks (170, 180) durchgeführt wird.

9. System nach Anspruch 8, wobei die mindestens eine Windturbine Folgendes umfasst:
mindestens einen Sensor (174A-E, 184A-B) zum Erfassen von Betriebsdaten für die mindestens eine Windturbine und
eine Kommunikationseinheit (176A-E, 186A-B), die über das private Netzwerk kommunikationsfähig mit dem WPP-Server gekoppelt ist.

10. System (100) nach Anspruch 8 oder 9, wobei die SOR-Voreinstellung (200) Folgendes umfasst:
einen Voreinstellungs-Header (210), um die Version der SOR-Voreinstellung (200) anzugeben,
ein Kompatibilitätsfeld, das Windturbinen und Windparks angibt, die mit der SOR-Voreinstellung (200) kompatibel sind,
ein Vorgangsfeld (220), das eine Art des Vorgangs und mindestens einen Verwaltungsschritt umfasst, die an der mindestens einen Windturbine durchzuführen sind,
ein Gültigkeitsfeld (230), das einen Verfallszeitstempel der SOR-Voreinstellung (200) angibt, und
ein Voreinstellungsbenutzerfeld (240), das Benutzer angibt, die autorisiert sind, mindestens eines von Erzeugung der SOR-Voreinstellung (200), Nutzung der SOR-Voreinstellung (200) und Überprüfung der SOR-Voreinstellung (200) durchzuführen.

11. System nach Anspruch 10, wobei die SOR-Voreinstellung (200) ferner Folgendes umfasst:
eine Voreinstellungskennung (2123) als eindeutige Referenz der SOR-Voreinstellung (200) und
eine Quellenkennung, die eine eindeutige Referenz der vorhandenen SOR-Nachricht angibt.

12. System nach Anspruch 10, wobei das Vorgangsfeld Folgendes umfasst:
ein Vorbedingungsfeld (226), das Vorbedingungen zum Initiieren der mindestens einen Wartungsaktivität umfasst,
ein Eingabefeld (224), das Eingabeparameter umfasst, wobei die Eingabeparameterwerte basierend auf den Benutzerzieldaten aktualisiert werden,
ein Ausführungsfeld (232), das Anweisungen und Präferenzen zum Ausführen der mindestens einen Wartungsaktivität umfasst,
ein Auswirkungsfeld (234), das die erwarteten Auswirkungen auf die erste WPP aufgrund der Durchführung der mindestens einen Wartungsaktivität umfasst, und
ein Nachbedingungsfeld (236), das Nachbedingungen zur Verifizierung des Erfolgs der Durchführung der mindestens einen Wartungsaktivität umfasst.

13. System nach einem der Ansprüche 8, 10 und 11, wobei die SOR-Nachricht Folgendes umfasst:
einen SOR-Header (360) einschließlich der voreingestellten Kennung, der SOR-Nachrichtenkennung und einer SOR-Nachrichtenversion,
ein SOR-Vorgangsfeld (370), das das Vorgangsfeld (220) in der SOR-Voreinstellung (200) umfasst, und
ein SOR-Signaturfeld (380) mit Daten des initiierenden Benutzers, die dem Nutzer zugeordnet sind, der die SOR-Nachricht aus der SOR-Voreinstellung (200) erzeugt.

## Revendications

1. Procédé de gestion d'une ou plusieurs centrales éoliennes (WPPs) (170, 180) comprenant chacune une pluralité d'éoliennes (170A-E, 180A-B), le procédé comprenant :
identification d'au moins une activité de maintenance à effectuer sur la base d'informations d'événement associées à au moins une éolienne dans une première centrale éolienne (180) de la pluralité de centrales éoliennes (170, 180) ; le procédé étant **caractérisé par** :
sélection d'un préréglage de requête d'opération de service (SOR) (200) comprenant des paramètres SOR, les paramètres SOR comprenant des paramètres de maintenance associés à la au moins une activité de maintenance ;
création d'un message SOR à partir du préréglage SOR (200) ;
accès à la au moins une éolienne (180A) dans la première centrale éolienne (180) lors de l'approbation du message SOR ; et
gestion de la première centrale éolienne (180) en exécutant des étapes de gestion définies dans le message SOR et en exécutant ainsi la au moins une activité de maintenance pour la au moins une éolienne accédée.

2. Procédé selon la revendication 1, dans lequel la sélection d'un préréglage SOR (200) comprend :
sélection d'un message SOR existant comme source pour le préréglage SOR (200) ;
identification des données cibles existantes à partir du message SOR existant, les données cibles existantes comprenant des données associées à une éolienne existante comprenant des paramètres opérationnels associés, des données du parc éolien existantes, une adresse de protocole Internet (IP) existante et un intervalle de temps d'accès existant ; et
réplication du message SOR existant sans les données cibles existantes identifiées.

3. Procédé selon la revendication 2, comprenant en outre :
comparaison des données cibles existantes dans le message SOR existant avec des données cibles d'utilisateur (310), dans lequel lorsque l'éolienne d'utilisateur dans les données cibles d'utilisateur est la même que l'éolienne existante, les données cibles existantes comprennent l'intervalle de temps d'accès existant.

4. Procédé selon la revendication 2, dans lequel la réplication du message SOR existant sans les données cibles existantes comprend :
assurance de la fidélité entre le message SOR existant et le préréglage SOR (200).

5. Procédé selon la revendication 4, comprenant en outre :
signature numérique du préréglage SOR (200) sur la base des autorisations associées à la au moins une activité de maintenance.

6. Procédé selon l'une des revendications 1 ou 2, comprenant en outre :
génération du préréglage SOR (200) à partir du message SOR existant, dans lequel le préréglage SOR (200) comprend :
un identifiant prédéfini (212) en tant que référence unique du préréglage SOR (200) ;
un identifiant de source indiquant une référence unique du message SOR existant ;
un champ de compatibilité indiquant les éoliennes et les parcs éoliens qui sont compatibles avec le préréglage SOR (200) ;
un champ de fonctionnement (220) comprenant un type de fonctionnement et au moins une étape de gestion à effectuer sur la au moins une éolienne ;
un champ de validité (230) indiquant l'horodatage d'expiration du préréglage SOR (200) ; et
un champ d'utilisateur prédéfini (240) indiquant les utilisateurs autorisés à effectuer au moins l'une parmi la génération du préréglage SOR (200), l'utilisation du préréglage SOR (200) et la révision du préréglage SOR (200).

7. Procédé selon l'une quelconque des revendications précédentes, dans lequel la génération d'un message SOR à partir du préréglage SOR (200) comprend :
réception des données cibles d'utilisateur (310) comprenant une éolienne d'utilisateur, une requête d'accès d'utilisateur, l'éolienne d'utilisateur et la requête d'accès d'utilisateur étant associées à la au moins une éolienne ;
mise à jour du préréglage SOR (200) avec les données cibles d'utilisateur ; et
génération du message SOR (350) pour l'éolienne d'utilisateur à partir du préréglage SOR (200) avec un champ d'initiateur avec des données d'utilisateur initiatrices pour l'activité de maintenance identifiée.

8. Système (100) de gestion d'une pluralité de centrales éoliennes (WPPs) (170, 180) comprenant chacune une pluralité d'éoliennes (170A-E, 180A-B), le système comprenant :
un serveur central (102) en communication avec un ou plusieurs serveurs WPP (150, 160) via un réseau externe (115), dans lequel chaque serveur WPP (150, 160) est associé à une centrale éolienne correspondante de la pluralité de centrales éoliennes (170, 180) et est en communication avec une ou plusieurs éoliennes de la centrale éolienne correspondante via un réseau privé (130, 135), dans lequel le serveur central est configuré pour :
identifier au moins une activité de maintenance à effectuer sur la base d'informations d'événement associées à au moins une éolienne dans une première centrale éolienne ;
sélectionner un préréglage de requête d'opération de service (SOR) (200) comprenant des paramètres SOR, les paramètres SOR comprenant des paramètres de maintenance associés à l'activité de maintenance identifiée ;
générer un message SOR (350) à partir du préréglage SOR (200) ;
accéder à la au moins une éolienne dans la première centrale éolienne lors de l'approbation du message SOR ; et
gérer la première centrale éolienne en exécutant les étapes de gestion définies dans le message SOR et en exécutant ainsi la au moins une activité de maintenance pour la au moins une éolienne accédée,
dans lequel le système est capable de gérer la pluralité de centrales éoliennes lorsque la au moins une activité de maintenance est réalisée dans des éoliennes de différentes centrales éoliennes de la pluralité de centrales éoliennes (170, 180) .

9. Système selon la revendication 8, dans lequel au moins une éolienne comprend :
au moins un capteur (174A-E, 184A-B) pour collecter des données opérationnelles pour la au moins une éolienne ; et
une unité de communication (176A-E, 186A-B) en communication couplée au serveur WPP via le réseau privé.

10. Système (100) selon la revendication 8 ou 9, dans lequel le préréglage SOR (200) comprend :
un en-tête prédéfini (210) pour indiquer la version du préréglage SOR (200) ;
un champ de compatibilité indiquant les éoliennes et les parcs éoliens qui sont compatibles avec le préréglage SOR (200) ;
un champ de fonctionnement (220) comprenant un type de fonctionnement et au moins une étape de gestion à effectuer sur la au moins une éolienne ;
un champ de validité (230) indiquant l'horodatage d'expiration du préréglage SOR (200) ; et
un champ d'utilisateur prédéfini (240) indiquant les utilisateurs autorisés à effectuer au moins l'une parmi la génération du préréglage SOR (200), l'utilisation du préréglage SOR (200) et la révision du préréglage SOR (200).

11. Système selon la revendication 10, dans lequel le préréglage SOR (200) comprend en outre :
un identifiant prédéfini en tant que référence unique du préréglage SOR (200) ; et
un identifiant de source indiquant une référence unique du message SOR.

12. Système selon la revendication 10, dans lequel le champ de fonctionnement comprend :
un champ de condition préalable (226) comprenant des conditions préalables pour initier la au moins une activité de maintenance ;
un champ d'entrée (224) comprenant des paramètres d'entrée, dans lequel les valeurs des paramètres d'entrée sont celles dont les valeurs sont mises à jour sur la base de données cibles d'utilisateur ;
un champ d'exécution (232) comprenant des directions et des préférences pour exécuter la au moins une activité de maintenance ;
un champ d'impact (234) comprenant l'impact attendu sur le premier WPP dû à l'exécution de la au moins une activité de maintenance ; et
un champ de condition postérieure (235) comprenant des conditions postérieures pour vérifier le succès de l'exécution de la au moins une activité de maintenance.

13. Système selon l'une quelconque des revendications 8, 10 et 11, dans lequel le message SOR comprend :
un en-tête SOR (360) comprenant l'identifiant prédéfini, l'identifiant de message SOR et une version de message SOR ;
un champ de fonctionnement SOR (370) comprenant le champ de fonctionnement (220) dans le préréglage SOR (200) ; et
un champ de signature SOR (380) avec des données d'utilisateur initiatrices associées à l'utilisateur générant le message SOR à partir du préréglage SOR (200).
